Europäisches Patentamt

(19) European Patent Office

Office européen des brevets

(11) Publication number : **0 426 426 B1**

## (12) EUROPEAN PATENT SPECIFICATION

(45) Date of publication of patent specification :
**20.12.95 Bulletin 95/51**

(21) Application number : **90311867.7**

(22) Date of filing : **30.10.90**

(51) Int. Cl.⁶ : **H04N 9/78**

---

(54) **Filter device**

---

(30) Priority : **31.10.89 JP 285412/89**

(43) Date of publication of application :
**08.05.91 Bulletin 91/19**

(45) Publication of the grant of the patent :
**20.12.95 Bulletin 95/51**

(84) Designated Contracting States :
**DE FR GB**

(56) References cited :
**EP-A- 0 313 372**
**EP-A- 0 329 382**
**NTZ ARCHIV vol. 10, no. 7, July 1988, BERLIN pages 181 - 190; D. TEICHNER: 'Three-dimensional pre- and post-filtering for PAL TV signals ( Part 2).'**

(73) Proprietor : **VICTOR COMPANY OF JAPAN, LTD.**
**12, Moriya-Cho 3-Chome,**
**Kanagawa-Ku**
**Yokohama-Shi, Kanagawa-Ken (JP)**

(72) Inventor : **Matsuo, Yasutoshi**
**480, Hisamoto,**
**Takatsu-ku**
**Kawasaki-Shi, Kanagawa-Ken (JP)**

(74) Representative : **Crawford, Andrew Birkby et al**
**A.A. THORNTON & CO.**
**Northumberland House**
**303-306 High Holborn**
**London WC1V 7LE (GB)**

---

## Description

BACKGROUND OF THE INVENTION

The present invention relates to a filter device for separating a colour signal (hereinafter called a C signal) from a composit video signal (hereinafter called a video signal) and an improvement of a Y/C separation circuit for separating a luminance signal (hereinafter called a Y signal) and the C signal from the video signal by means of the filter device in a video apparatus such as a video tape recorder and a television.

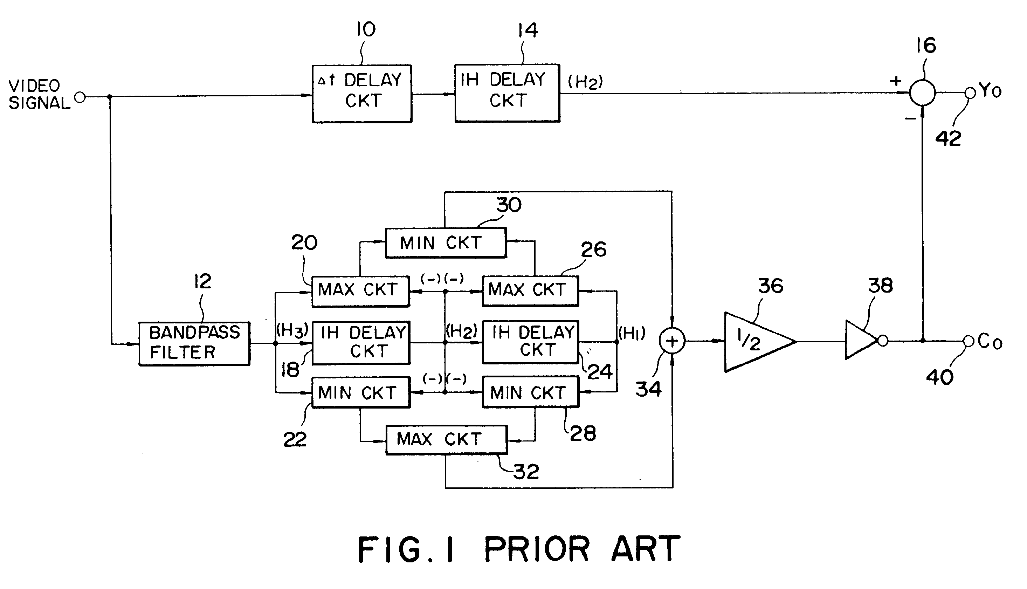

FIG. 1 shows a conventional filter device by means of a comb filter. The conventional filter device is of three-line type applicable to three scanning lines by means of a logic comb filter. Therefore, the conventional filter device exhibits better Y/C separation property compared to a general filter device of two-line type. Similar devices are known from EP-A-0 329 382 and EP-A-0 313 372.

In the figure, a video signal the objective of Y/C separation is applied to a $\Delta$ delay circuit 10 in a Y signal separation system and a bandpass filter 12 in a C signal separation system, respectively.

The output of the $\Delta$ delay circuit 10 is connected to the plus input of a subtractor 16 via a 1H delay circuit 14 which conducts delay for a term of one horizontal scanning.

The output of the bandpass filter 12 is connected to each of the inputs of a 1H delay circuit 18, a maximum circuit 20 which compares two signals applied thereto and outputs one of the signals of which the electric potential is higher than the other's and a minimum circuit 22 which compares two signals applied thereto and outputs one of the signals of which the electric potential is lower than the other's.

The output of the 1H delay circuit 18 is connected to the input of a 1H delay circuit 24 and also to each of the inputs of maximum circuits 20 and 26 and minimum circuits 22 and 28 via inverters not shown. The output of the 1H delay circuit 24 is connected to each of the inputs of the maximum circuit 26 and the minimum circuit

Both the outputs of the maximum circuits 20 and 26 are connected to the input of a minimum circuit 30. Both the outputs of the minimum circuits 22 and 28 are connected to the input of a maximum circuit 32.

Both the outputs of the minimum circuit 30 and the maximum circuit 32 are connected to the input of an adder 34. The output of the adder 34 is connected to the input of an amplifier 36 in which gain of a signal applied thereto is reduced to one-half. The output of the amplifier 36 is connected to an output terminal 40 via an inverting amplifier 38 of gain "1" and further to the minus input of a subtractor 16 of which the output is connected to an output terminal 42.

Under the configuration, a video signal applied to the filter device is delayed by $\Delta t$ by the $\Delta t$ delay circuit 10 and further delayed by one term of horizontal scanning by the 1H delay circuit 14 and then applied to the subtractor 16 in the Y signal separation system.

A desired frequency band component (hereinafter called a video signal $H_3$) including the C signal is separated from the video signal by the bandpass filter 12 in the C signal separation system. The video signal $H_3$ is delayed to be a video signal $H_2$ by the 1H delay circuit 18. The video signal $H_2$ is further delayed to be a video signal $H_1$ by the 1H delay circuit 24.

With respect to the video signal $H_3$ on the present scanning line, the video signal $H_2$ on a scanning line, one line prior to the present scanning line, and the video signal $H_1$ on a scanning line, two lines prior to the present scanning line are therefore produced by the IN delay circuits 18 and 24, respectively.

The video signal $H_1$ is applied to the maximum circuit 26 and also the minimum circuit 28. The video signal $H_2$ is inverted by inverters not shown and applied to the maximum circuits 20 and 26. The video signal $H_3$ is applied to the maximum circuit 20 and also the minimum circuit 22.

Comparison of input signals is made at each of the maximum and minimum circuits 20, 26, 22 and 28. The results of the comparison are applied to the minimum and maximum circuits 30 and 32, respectively.

The results of the comparison of the minimum and maximum circuits 30 and 32 are applied to the adder 34. The gain of the result of addition of the adder 34 is made one-half by the amplifier 36. The polarity of the result of the amplifier 36 is inverted by the inversion amplifier 38. The inversion amplifier 38 then produces a separated signal $C_0$ which is applied to the output terminal 40.

The separated signal $C_0$ is also applied to the subtractor 16 where the separated signal $C_0$ is subtracted from the video signal $H_2$ to produce a separated signal $Y_0$. The separated signal $Y_0$ is then applied to the output terminal 42.

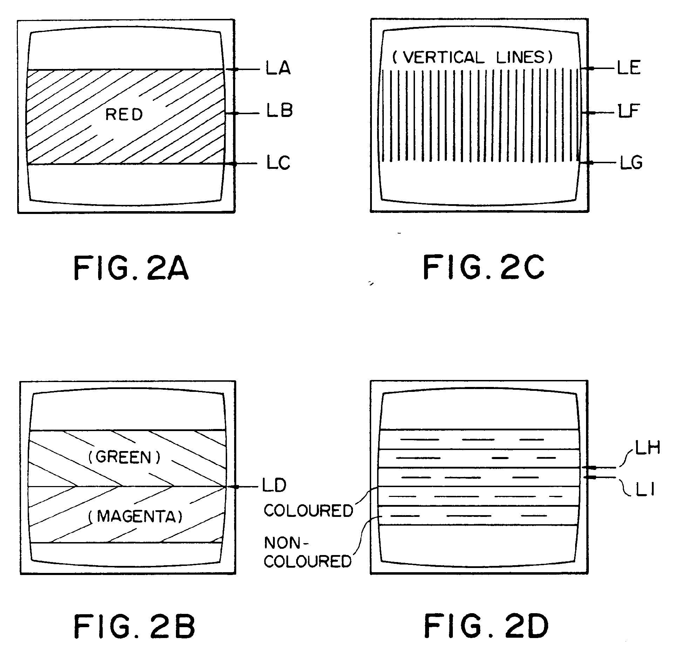

For example, as shown in FIG. 2A, with respect to a first scanning line LA having a red component on the border of a red-coloured portion and a non-coloured portion in the direction of vertical scanning on a display screen, the separated signals $Y_0$ and $C_0$ are obtained as follows:

The line LA has the red component so that the signal level of the video signal $H_2$ is expressed by "1". The next line also has a red component, however, the phase of the next line is inverted so that the signal level of the video signal $H_3$ is expressed by "-1". On the other hand, the line, one line prior to the line LA, has a non-coloured component so that the signal level of the video signal $H_1$ is expressed by "0".

On the basis of those values, comparison is made by the maximum and minimum circuits 20, 26 and 32 and 22, 28 and 30.

For example, the value "-1" the result of inversion of the value "1" of the video signal $H_2$ and the value "-1" of the video signal $H_3$ are applied to the maximum circuit 20 to be compared with each other. Both the values are "-1" so that the value "-1" is applied to the minimum circuit 30. The same comparison is made in the other maximum and minimum circuits so that the output of the adder is "-2". The output of the amplifier 36 is thus "-1". Further, the output of the inversion amplifier is "1" which is the separated signal $C_0$. The value "1" is also applied to the subtractor 16.

On the other hand, the video signal $H_2$ of the line LA is also produced by the 1H delay circuit 14 in the Y signal separation system and applied to the subtractor 16. Therefore, the signal level of the separated signal $Y_0$ as the output of the subtractor 16 is "0".

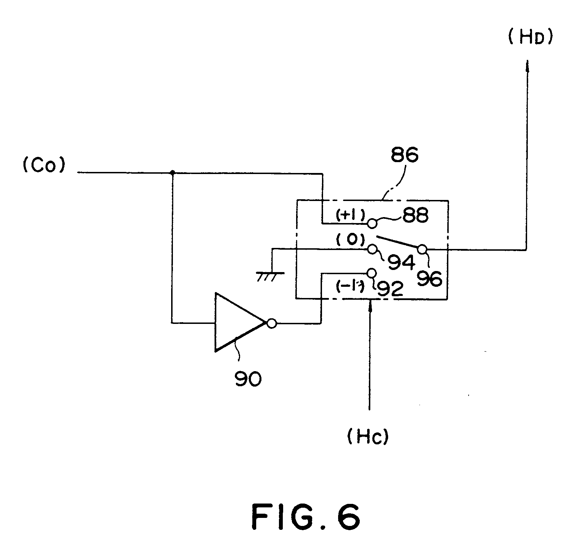

The TABLE 1 shows the separated signals $C_0$ and $Y_0$ obtained with respect to the scanning lines LB to LI shown in FIGS. 6A to 6D.

| LINE | $H_1$ | $H_2$ | $H_3$ | $Y_0$ | $C_0$ |
|------|-------|-------|-------|-------|-------|
| LA | 0 | 1 | -1 | 0 | 1 |
| LB | -1 | 1 | -1 | 0 | 1 |
| LC | 1 | 0 | 0 | 0 | 0 |
| LD | 1 | 1 | -1 | 0 | 1 |
| LE | 0 | 0 | 1 | 1/2 | 1/2 |
| LF | 1 | 1 | 1 | 1 | 0 |
| LG | 1 | 1 | 0 | 1/2 | 1/2 |
| LH | 0 | 1 | 0 | 1/2 | 1/2 |
| LI | 1 | 0 | 1 | 1/2 | -1/2 |

TABLE 1

In TABLE 1, each of the lines LA and LC in FIG. 2A is the border of colour in the vertical direction. On the line LB in FIG. 2A, colour components are correlative in vertical direction with respect to the surrounding lines. The line LD in FIG. 2B is the line where hue is inverted in the vertical direction. The lines LE and LG in FIG. 2C are the vertical border lines of high frequency Y component, respectively. On the line LF in FIG. 2C, high frequency Y components are highly correlative in vertical direction with adjacent scanning lines.

The line LH in FIG. 2D is the line of a colour component. While, the lines located over and under the line LH are of non-coloured components, respectively. The line LI in FIG. 2D is of a non-coloured component. While, the lines located over and under the line LI are of coloured components, respectively.

As is obvious from TABLE 1, the conventional filter device shown in FIG. 1 is not necessarily excellent than a filter device of two line correlation type. There are some errors produced, that is, $C_0$ and/or $Y_0$ = 1/2 in some image patterns in TABLE 1.

The lines LH and LI induce problems in the conventional device. In the line LH, the C signal should have a signal level of "1" and the Y signal "0", while in the line LI both the C and Y signals should have "0". However, as shown in TABLE 1, those signals are all "1/2".

These phenomena are often generated when a small object is imaged by a video camera and are observed as running of colour and dot obstraction.

As is understood from the foregoing, the conventional filter device has such a drawback that resolution of colour images is decreased due to spilled colour and dot obstraction is easily generated to the Y signal.

SUMMARY OF THE INVENTION

In the light of these problems with the conventional art, the present invention has an object the provision of a filter device in which colour spill and dot obstraction to the Y signal are reduced.

The present invention provides a filter device for separating a colour signal and a luminance signal from a video signal according to correlation between video signals on adjacent scanning lines, the device comprising:

colour signal generation means including first and second delay means each arranged to sequentially delay the video signal to thus generate first and second delay signals and further comprising a plurality of minimum and maximum circuits arranged to generate, from said video signal and said first and second delay signals, a first colour signal;

compensating means arranged to generate a compensating signal and to combine said compensating signal with said first colour signal; and

subtraction means arranged to subtract said compensated colour signal from the first delay signal to generate said luminance signal;

said compensating means having input thereto the video signal and the first and second delay signals and comprising:

first judgement means arranged to judge correlation between the video signal and the second delay signal;

second judgement means arranged to judge correlation between the first delay signal and each of the video signal and the second delay signal when the first judgement means judges that there is correlation; and

means arranged to compensate the amplitude of the first colour signal when the second judgement means judges that there is no correlation;

whereby the filter device is arranged to compensate for amplitude distortion in the separated colour and luminance signals when the video signal and the second delay signal correlate while these signals and the first delay signal do not correlate.

Other objects and advantages of the present invention will become apparent from the detailed description to follow taken in conjunction with the appended claims.

## BRIEF DESCRIPTION OF THE DRAWINGS

FIG. 1 is a block diagram of a conventional filter device;

FIGS. 2A to 2D are explanatory views of several image patterns;

FIG. 3 is a block diagram of a first preferred embodiment of the filter device according to the present invention;

FIG. 4 is a block diagram of a second preferred embodiment of the filter device according to the present invention;

FIG. 5 is a block diagram of a third preferred embodiment of the filter device according to the present invention; and

FIG. 6 is a block diagram of a preferred embodiment of the multiplication circuit 66 shown in the above preferred embodiments of the filter device according to the present invention.

## DESCRIPTION OF THE PREFERRED EMBODIMENTS

The present invention will now be described in detail with reference to the accompanying drawings. Throughout the drawings, like reference numerals and letters are used to designate like or equivalent elements for the sake of simplicity of explanation.

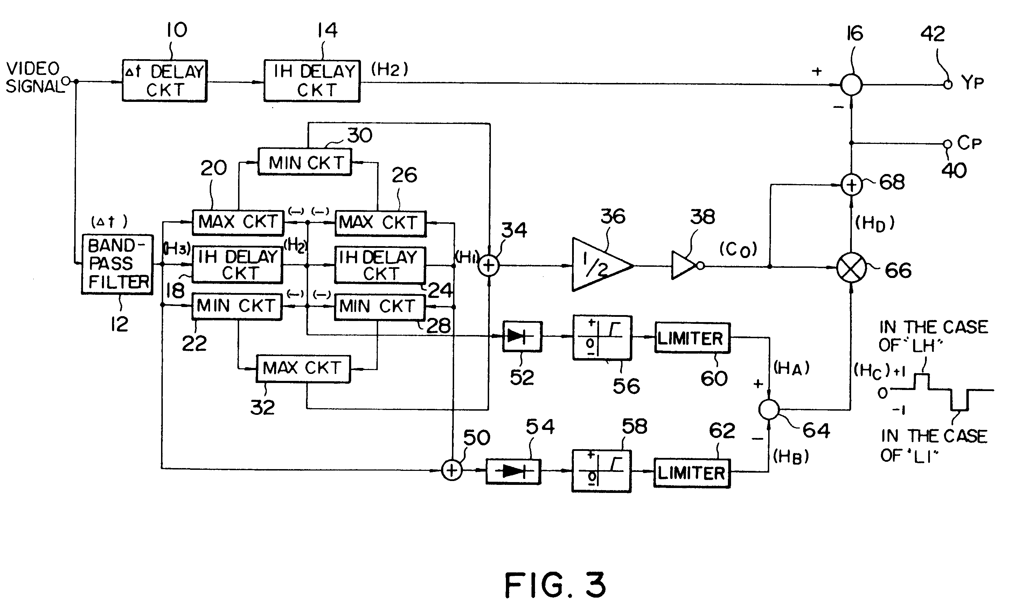

A first preferred embodiment of the filtering device according to the present invention will be explained with reference to FIG. 3.

In the figure, the output of a bandpass filter 12 is connected to one of the inputs of an adder 50. The output of a 1H delay circuit 24 is further connected to the other input of the adder 50. The outputs of a 1H delay circuit 18 and the adder 50 are connected to the inputs of rectifier circuits 52 and 54, respectively.

The outputs of the rectifier circuits 52 and 54 are connected to the inputs of threshold circuits 56 and 58, respectively. The output of the threshold circuit 56 is connected to the plus input of a subtractor 64 through a limiter 60. While, the output of the threshold circuit 58 is connected to the minus input of the subtractor 64 via a limiter 62.

The output of the subtractor 64 is connected, with the output of the inverting amplifier 38, to the inputs of a multiplication circuit 66, respectively. The output of the multiplication circuit 66 is connected, with the output of the inverting amplifier 38, to the inputs of an adder 68, respectively. The output of the adder 68 is connected to the minus input of the subtractor 16 and also an output terminal 40.

The adder 50 is to add the video signals $H_1$ and $H_3$ which are the signals on the lines located over and under the aimed line. The rectifier circuits 52 and 54 are to rectify the video signals applied thereto, respectively.

Each of the threshold circuits 56 and 58 passes the video signal applied thereto through when the colour saturation of the applied signal is high, to compensate spilled colour and dot obstruction and also remove noise component produced at a lower level.

Both the limiters 60 and 62 are to restrict amplitude of the gain of multiplication of the multiplication circuit 66 of maximum $\pm 1$.

The adder 50, the rectifier circuits 52 and 54, the threshold circuits 56 and 58 and the limiters 60 and 62 and the subtractor 64 constitute a pattern detection means to detect patterns each corresponding to the lines LH and LI shown in FIG. 2D. The multiplication circuit 66 and the adder 68 constitute compensation means to compensate separated signals.

Function of the first preferred embodiment will be explained with respect to the line LH first. As is shown in FIG. 2D, the line LH is of a colour component. While, the lines located over and under the line LH are both of non-coloured components. Thus, the video signals $H_1$, $H_2$ and $H_3$ have a signal level of "0", "1" and "0", respectively according to TABLE 1.

Therefore, in FIG. 3, the video signal $H_2$ of "1" is applied to the rectifier circuit 52. The signal is rectified therein and applied to the limiter 60 which produces a signal $H_A$ of "1". The signal $H_A$ is then applied to the subtractor 64.

On the other hand, the video signals $H_1$ and $H_3$ of "0" are applied to the adder 50 which thus produces a signal of "0". The signal thus produced is processed by the rectifier circuit 54, the threshold circuit 58 and the limiter 62 to produce a signal $H_B$. The signal $H_B$ is also applied to the subtractor 64.

The subtractor 64 computes $H_A - H_B$ to produce a signal $H_C$ of "1" which is then applied to the multiplication circuit 66. The separated signal $C_0$ is also applied to the multiplication circuit 66 from the inverting amplifier 38. The separated signal $C_0$ is of "1/2" according to TABLE 1. Therefore, the signal $H_D$ produced by the multiplication circuit 66 is of "1/2". The signal $H_D$ and the separated signal $C_0$ are applied to the adder 68 which produces a separated signal $C_P$ of "1". The separated signal $C_P$ is then applied to the output terminal 40.

The separated signal $C_P$ is further applied, with the video signal $H_2$, to the subtractor 16 which computes $H_2 - C_P$. Both the signals are of "1" so that the subtractor 16 produces "0" as a separated signal $Y_P$.

The above computation is expressed by equations as follows:

$$\begin{aligned} C_P &= C_0 + H_D \\ &= C_0 + C_0 \times H_C \\ &= C_0 + C_0 \times (H_A - H_B) \\ &= C_0(1 + H_A - H_B) \quad (1) \end{aligned}$$

and

$$Y_P = H_2 - C_P \quad (2)$$

When $H_2 = 1$, $H_A = 1$, $H_B = 0$ and $C_0$ are put into the above equations,

$$C_P = 1 \text{ and } Y_P = 0 \quad (3)$$

are obtained. The errors occurred in the conventional filter device is thus cancelled. Therefore, desired separated signals are obtained.

Next, in the case of the line LI in FIG. 2D, the line LI is of a non-coloured component and the lines located over and under the line LI both are of coloured components. Thus, the video signals $H_1$, $H_2$ and $H_3$ are of "1", "0" and "1" according to TABLE 1.

Therefore, the video signal $H_2$ of "0" is applied to the rectifier circuit 52. The signal thus rectified is applied to the threshold circuit 56 and the limiter 62 to produce a signal $H_A$ of "0" which is applied to the subtractor 64.

On the other hand, signals applied to the adder 50 are the video signals $H_1$ and $H_3$ so that the adder 5 produces a signal of "2". This signal is processed by the rectifier circuit 54, the threshold circuit 58 and the limiter 62 to produce a signal $H_B$ of "1". The signal $H_B$ is also applied to the subtractor 64 which computes $H_A - H_B$ to produce a signal $H_C$ of "1". The signal $H_C$ is then applied to the multiplication circuit 66.

The separated signal $C_0$ from the inverting amplifier 38 is also applied to the multiplication circuit 66. The value of the signal $C_0$ is of "-1/2" according to TABLE 1. Thus, a signal $H_D$ produced by the multiplication circuit 66 is of "1/2". The signal $H_D$ is applied, with the separated signal $C_0$, to the adder 68. Both the signals $H_D$ and $C_0$ are added with each other in the adder 68 to produce a signal of "0" as the separated signal $C_P$. The separated signal $C_P$ is then applied to the output terminal 40.

The separated signal $C_P$ is further applied, with the video signal $H_2$, to the subtractor 16 which computes $H_2 - C_P$. As is already mentioned, the video signal $H_2$ is of "0" and the separated signal $C_P$ is of "0". Thus, the subtractor 16 produces a signal of "0" as a separated signal $Y_P$.

When the above computation is also conducted by the equations (1) and (2), since $H_2 = 0$, $H_A = 0$, $H_B = 1$ and $C_0 = -1/2$, so that

$$C_P = 0 \text{ and } Y_P = 0 \quad (4)$$

Therefore, the errors occurred in the conventional filter device is cancelled so that desired separated signals are obtained.

As is understood from the foregoing, the biggest demerit of the comb filter, such as, running of colour (decrease of colour (decrease of vertical resolution) and dot obstraction on an image of pulse patterns in which colours are changed at every line, is reduced.

In an actual image, the first preferred embodiment of the filter device according to the present invention is particularly useful for photographing of a distant view, a slender object and an object having lateral stripes.

In the case of the lines LA to LG in FIG. 2A to 2C, the signals $H_A$ and $H_B$ are of "0" or "1". Thus, the signal $H_C$ produced by the subtractor 64 is of "0". In other words, the subtractor 64 produces a signal of "1" in the case of the line 1H and "-1" the line LI, and further produces "0" in the other cases. Therefore, $C_P = C_0$ is obtained according to the equation (1). This means that the first preferred embodiment of the filter device produces the same separated signals as those of the conventional device.

The results obtained from the foregoing are shown in TABLE 2 with an image pattern per scanning line.

| LINE | $H_1$ | $H_2$ | $H_3$ | $Y_P$ | $C_P$ | PATTERN |
|------|-------|-------|-------|-------|-------|---------|
| LA | 0 | 1 | -1 | 0 | 1 | PULSE |
| LB | -1 | 1 | -1 | 0 | 1 | PULSE |
| LC | 1 | 0 | 0 | 0 | 0 | STEP |
| LD | 1 | 1 | -1 | 0 | 1 | STEP |
| LE | 0 | 1 | 1 | 1/2 | 1/2 | STEP |
| LF | 1 | 1 | 1 | 1 | 0 | FLAT |
| LG | 1 | 1 | 0 | 1/2 | 1/2 | STEP |
| LH | 0 | 1 | 0 | 0 | 1 | PULSE |
| LI | 1 | 0 | 1 | 0 | 0 | PULSE |

TABLE 2

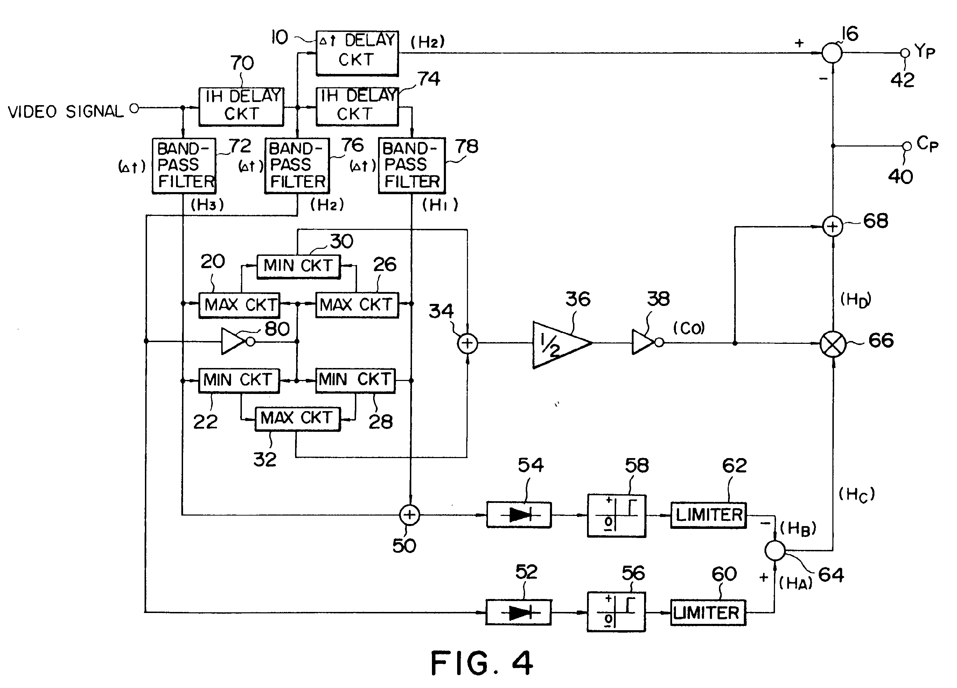

A second preferred embodiment of the filter device according to the present invention will be explained with reference to FIG. 4.

In the figure, a video signal is applied to a 1H delay circuit 70 and also a bandpass filter 72. The output of the 1H delay circuit 70 is connected to each of the inputs of a Δt delay circuit 10, a 1H delay circuit 74 and a bandpass filter 76. The output of the 1H delay circuit 74 is connected to the input of a bandpass filter 78.

The output of the bandpass filter 72 producing a video signal $H_3$ is connected to each of the inputs of a maximum circuit 20 and a minimum circuit 22. The output of the bandpass filter 76 producing a video signal $H_2$ is connected to each of the inputs of maximum circuits 20 and 26 and minimum circuits 22 and 28 via an inverting amplifier 80. Furthermore, the output of the bandpass filter 78 producing a video signal $H_1$ is connected to each of the inputs of a maximum circuit 26 and a minimum circuit 28.

The output of the Δt delay circuit 10 is connected to the plus input of a subtractor 16. Other circuit configuration is the same as the first preferred embodiment.

The 1H delay circuit is employed in both the Y and C signal separation systems in the first preferred embodiment, while the 1H delay circuits 70 and 74 are shared between the systems in the second preferred embodiment. The filter device of the second preferred embodiment operates in the same manner as the first preferred embodiment on the whole.

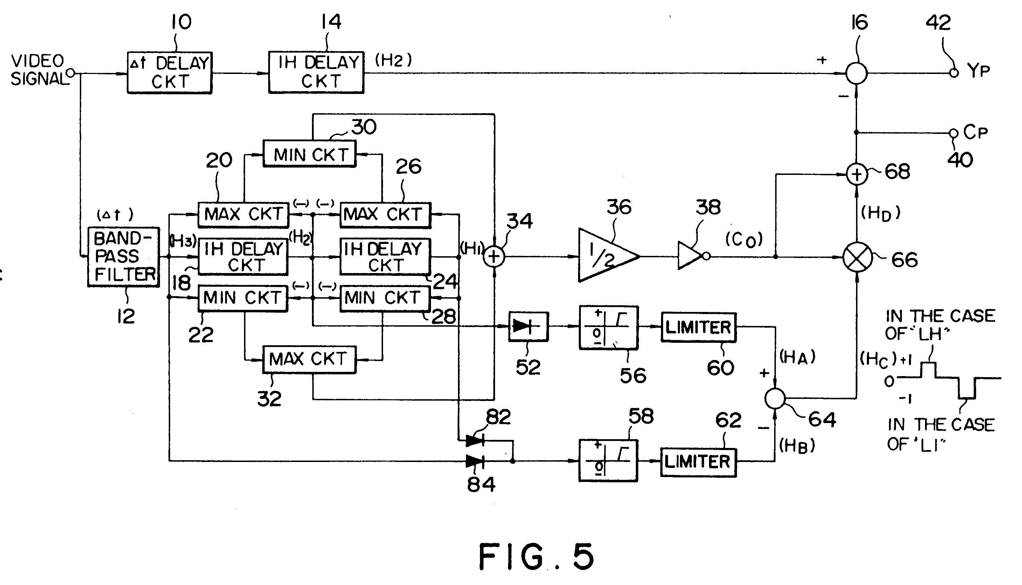

A third preferred embodiment of the filter device according to the present invention will be explained with reference to FIG. 5. Video signals $H_1$ and $H_3$ of the lines each located over and under the aimed line are rectified by rectifier circuits 82 and 84, respectively. The signals thus rectified are added with each other by means of wired OR. The filter device of the third preferred embodiment operates basically in the same manner as the first preferred embodiment.

The present invention may be embodied in other specific forms without departing from the spirit or essential characteristics thereof. For example, as for the multiplication circuit 66, such as a switch shown in FIG. 6 may be used.

In the figure, a separated signal $C_0$ is applied to a switching terminal 88 of a switch 86 and also to a switching terminal 92 via an inverting amplifier 90. Another switching terminal 94 is grounded. A common terminal 96 of the switch 86 is connected to the input of the adder 68.

The switch 86 is switched by means of a signal $H_C$. When the value of the signal $H_C$ is "1" (corresponding to the line LH in FIG. 6D), the switching terminal 88 is connected to the common terminal 96 to pass the separated signal $C_0$ therethrough. On the other hand, when the value of the signal $H_C$ is "-1" (corresponding to the line LI in FIG. 6D), the switching terminal 92 is connected to the common terminal 96 to produce an inverting signal of the separated signal $C_0$. Furthermore, when the value of the signal $H_C$ is "0" (corresponding to the other lines in FIGS. 6A to 6C), the switching terminal 94 is connected to the common terminal 96 to produce a signal of "0". This operation is the same as the first preferred embodiment.

Above embodiments are explained in the case of NTSC (National Television System Committee) system. However, a 2H delay circuit is used instead of the 1H delay circuit in the case of PAL (Phase Alternation Line) system.

Furthermore, each of above embodiments comprises a comb filter utilizing vertical correlation. Field or frame correlation also may be utilized. In this case, an 1 field delay (262 or 263 lines) circuit or an 1 frame delay circuit may be used. Furthermore, the present invention is applicable to any filter devices utilizing correlation.

As is understood from the foregoing, according to the present invention, separated signals are compensated by detecting correlation property of signals. Therefore, spilled colour is reduced and dot obstraction to a Y signal occurred when colour signals are separated from a complex image signal is also reduced.

## Claims

1. A filter device for separating a colour signal and a luminance signal from a video signal according to correlation between video signals on adjacent scanning lines, the device comprising:

colour signal generation means including first and second delay means (18,24) each arranged to sequentially delay the video signal to thus generate first and second delay signals and further comprising a plurality of minimum and maximum circuits arranged to generate, from said video signal and said first and second delay signals, a first colour signal;

compensating means arranged to generate a compensating signal and to combine said compensating signal with said first colour signal; and

subtraction means (16) arranged to subtract said compensated colour signal from the first delay signal to generate said luminance signal;

said compensating means having input thereto the video signal and the first and second delay signals and comprising:

first judgement means (50) arranged to judge correlation between the video signal and the second delay signal;

second judgement means (64) arranged to judge correlation between the first delay signal and each of the video signal and the second delay signal when the first judgement means (50) judges that there is correlation; and

means (66,68) arranged to compensate the amplitude of the first colour signal when the second judgement means (64) judges that there is no correlation;

whereby the filter device is arranged to compensate for amplitude distortion in the separated colour and luminance signals when the video signal and the second delay signal correlate while these signals and the first delay signal do not correlate.

2. A filter device as claimed in claim 1, further comprising detection means (56 and 58) for detecting each of the amplitude of the video signal and the first and second delay signals wherein a first amplitude level and a second amplitude level which is smaller than the first are set as threshold levels, thus to judge the correlation among the signals on the basis of the amplitude levels.

3. A filter device as claimed in claim 2, wherein the compensation means (66 and 68) amplifies the amplitude of the separated colour signal so as to have the first amplitude level when the amplitude of the first delay signal is detected as having the first amplitude level and both the video signal and the second delay signal are detected as having the second amplitude level, while said compensation means attenuates the amplitude of the separated colour signal so as to have the second amplitude level when the amplitude of the first delay signal is detected as having the second amplitude level and both the video signal and. the second delay signal are detected as having the first amplitude level.

**Patentansprüche**

1. Filtervorrichtung zum Abtrennen eines Farbsignals und eines Luminanzsignals aus einem Videosignal entsprechend einer Korrelation zwischen Videosignalen auf benachbarten Abtastzeilen, welche Vorrichtung aufweist:

eine Farbsignalerzeugungseinrichtung, die eine erste und zweite Verzögerungseinrichtung (18, 24) aufweist, die jeweils dazu ausgelegt sind, sequentiell das Videosignal zu verzögern, um auf diese Weise erste und zweite Verzögerungssignale zu erzeugen, und ferner aufweisend mehrere Minimum- und Maximumschaltungen, die dazu ausgelegt sind, aus dem Videosignal und dem ersten und zweiten Verzögerungssignal ein erstes Farbsignal zu erzeugen;

eine Kompensationseinrichtung, die dazu ausgelegt ist, ein Kompensationssignal zu erzeugen und das Kompensationssignal mit dem ersten Farbsignal zu kombinieren; und

eine Subtraktionseinrichtung (16), die dazu ausgelegt ist, das kompensierte Farbsignal vom ersten Verzögerungssignal zu subtrahieren, um das Luminanzsignal zu erzeugen;

wobei der Kompensationseinrichtung das Videosignal und das erste und zweite Verzögerungssignal zugeführt werden und diese Einrichtung aufweist:

eine erste Beurteilungseinrichtung (50), die dazu ausgelegt ist, die Korrelation zwischen dem Videosignal und dem zweiten Verzögerungssignal zu beurteilen;

eine zweite Beurteilungseinrichtung (64), die dazu ausgelegt ist, die Korrelation zwischen dem ersten Verzögerungssignal und sowohl dem Videosignal als auch dem zweiten Verzögerungssignal zu beurteilen, wenn die erste Beurteilungseinrichtung (50) urteilt, daß eine Korrelation vorliegt; und

eine Einrichtung (66, 68), die dazu ausgelegt ist, die Amplitude des ersten Farbsignals zu kompensieren, wenn die zweite Beurteilungseinrichtung (64) urteilt, daß keine Korrelation vorliegt;

wobei die Filtervorrichtung dazu ausgelegt ist, eine Amplitudenverzerrung in den abgetrennten Farb- und Luminanzsignalen zu kompensieren, wenn das Videosignal und das zweite Verzögerungssignal korrelieren, während diese Signale und das erste Verzögerungssignal nicht korrelieren.

2. Filtervorrichtung nach Anspruch 1, ferner aufweisend eine Detektoreinrichtung (56 und 58) zur Detektion der Amplitude sowohl des Videosignals als auch des ersten und zweiten Verzögerungssignals, wobei ein erster Amplitudenpegel und ein zweiter Amplitudenpegel, der kleiner als der erste Amplitudenpegel ist, als Schwellwerte festgesetzt werden, um so die Korrelation unter den Signalen auf der Grundlage der Amplitudenpegel zu beurteilen.

3. Filtervorrichtung nach Anspruch 2, in welcher die Kompensationseinrichtung (66 und 68) die Amplitude des abgetrennten Farbsignals so verstärkt, daß diese den ersten Amplitudenpegel aufweist, wenn die Amplitude des ersten Verzögerungssignals dahingehend detektiert wird, daß sie den ersten Amplitudenpegel aufweist, und sowohl das Videosignal als auch das zweite Verzögerungssignal dahingehend detektiert werden, daß sie den zweiten Amplitudenpegel aufweisen, während die Kompensationseinrichtung die Amplitude des abgetrennten Farbsignals so schwächt, daß diese den zweiten Amplitudenpegel aufweist, wenn die Amplitude des ersten Verzögerungssignals dahingehend detektiert wird, daß sie den zweiten Amplitudenpegel aufweist, und sowohl das Videosignal als auch das zweite Verzögerungssignal dahingehend detektiert werden, daß sie den ersten Amplitudenpegel aufweisen.

**Revendications**

1. Un dispositif de filtrage destiné à séparer, à partir d'un signal vidéo, un signal de couleur et un signal de luminance en fonction de la corrélation entre des signaux vidéo présents sur des lignes adjacentes de balayage, le dispositif comprenant:

un moyen générateur de signal de couleur, qui inclut un premier et un deuxième moyens de retard (18, 24) agencés chacun de manière à retarder en séquence le signal vidéo pour engendrer ainsi un premier et un deuxième signaux de retard, et qui comprend en outre une série de circuits de minimum et de maximum agencés pour engendrer, à partir dudit signal vidéo et desdits premier et deuxième signaux de retard, un premier signal de couleur;

un moyen compensateur à agencer pour engendrer un signal compensateur et pour combiner ledit signal compensateur avec ledit premier signal de couleur, et

un moyen soustracteur (16) agencé pour soustraire du premier signal de retard ledit signal compensé de couleur de façon à engendrer ledit signal de luminance;

le signal vidéo et le premier et le deuxième signaux de retard étant entrés audit moyen compensateur et ce moyen comprenant:

un premier moyen d'évaluation (50) agencé pour évaluer une corrélation entre le signal vidéo et le deuxième signal de retard;

un deuxième moyen d'évaluation (64) agencé pour évaluer, lorsque le premier moyen d'évaluation (50) évalue qu'il existe une corrélation, une corrélation entre, d'une part, le premier signal de retard et, d'autre part, tant le signal vidéo que le deuxième signal de retard; et

un moyen (66, 68) agencé de manière à compenser l'amplitude du premier signal couleur lorsque le deuxième moyen d'évaluation (64) estime qu'il n'existe aucune corrélation;

le dispositif de filtrage étant agencé de manière à compenser une distorsion d'amplitude dans les signaux séparés de couleur et de luminance lorsque le signal vidéo et le deuxième signal de retard sont corrélés tandis que ces signaux et le premier signal de retard ne sont pas corrélés.

2. Un dispositif de filtrage selon la revendication 1, comprenant en outre un moyen détecteur (56 et 58), destiné à détecter l'amplitude du signal vidéo et du premier et le deuxième signaux de retard, dans lequel un premier niveau d'amplitude et un deuxième niveau d'amplitude qui est plus petit que le premier sont définis comme niveaux de seuil, afin d'évaluer ainsi la corrélation entre les signaux sur la base des niveaux d'amplitude.

3. Un dispositif de filtrage selon la revendication 2, dans lequel le moyen compensateur (66 et 68) amplifie l'amplitude du signal de couleur séparé de façon à ce qu'elle soit égale au premier niveau d'amplitude lorsque l'amplitude du premier signal de retard est détectée comme égale au premier niveau d'amplitude et que les amplitudes tant du signal vidéo que du deuxième signal de retard sont détectées comme égales au deuxième niveau d'amplitude, tandis que ledit moyen de compensation atténue l'amplitude du signal de couleur séparé de façon à ce qu'elle soit égale au deuxième niveau d'amplitude lorsque l'amplitude du premier signal de retard est détectée comme égale au deuxième niveau d'amplitude et que les amplitudes tant du signal vidéo que du deuxième signal de retard sont détectées comme égales au premier niveau d'amplitude.

FIG.1 PRIOR ART

FIG. 2A

FIG. 2C

FIG. 2B

FIG. 2D

FIG. 3

FIG. 4

EP 0 426 426 B1

FIG. 5

(Co) ———————

(HD)

86

(+1) ○—88

(0) ○ 94 ○
—|—| ○ 96

(-1) ○ 92

90

(Hc)

# FIG. 6